# FASCICULE DE BREVET EUROPEEN

(11) **EP 1 677 179 B1**
(45) Date de publication et mention de la délivrance du brevet: **03.03.2010**
(21) Numéro de dépôt: 05112672.0
(22) Date de dépôt: 21.12.2005
(51) Int. Cl.: G01C 21/26, G06F 3/033, G09B 29/10

(54) **Station de travail avec affichage à échelle variable**
Arbeitsstation mit Anzeige mit variablem Maßstab
Workstation with a display of variable scale

(30) Priorité: 31.12.2004 FR 0453274
(43) Date de publication de la demande: 05.07.2006
(73) Titulaire: Alcatel Lucent, 75008 Paris (FR)
(72) Inventeur: Houillier, Jean-Roch, 91240 Saint-Michel sur Orge (FR); Brethereau, Alain, 78220 Viroflay (FR); De Mathan, Béatrix, 75016 Paris (FR)
(74) Mandataire: El Manouni, Josiane

(56) Documents cités:
- WO-A-01/61445
- DE-A1- 19 941 945
- US-A1- 2002 075 511
- US-B1- 6 426 761
- PATENT ABSTRACTS OF JAPAN vol. 1998, no. 11, 30 septembre 1998 (1998-09-30) & JP 10 153438 A (SUMITOMO ELECTRIC IND LTD), 9 juin 1998 (1998-06-09)
- MOORMAN J ET AL: "Visualizing test information: A novel approach for improving testability" TEST CONFERENCE, 1993. PROCEEDINGS., INTERNATIONAL BALTIMORE, MD, USA 17-21 OCT. 1993, NEW YORK, NY, USA,IEEE, 17 octobre 1993 (1993-10-17), pages 149-156, XP010148259 ISBN: 0-7803-1430-1

## Description

La présente invention concerne une station de travail, du type comportant une unité de visualisation d'au moins une carte comportant un fond et un ensemble de symboles répartis sur le fond, une interface de sélection de l'aspect de la carte par l'utilisateur et des moyens de commande de l'unité de visualisation pour modifier l'aspect de la carte en fonction de la sélection d'aspect faite par l'utilisateur depuis l'interface de sélection.

De nombreuses stations de travail permettant la visualisation d'une carte disposent de moyens pour effectuer un changement d'échelle de la carte, qu'il s'agisse d'un agrandissement d'une zone réduite de la carte préalablement affichée, ou au contraire d'un élargissement du point de vue par rapport à la fraction de carte initialement affichée. Ces moyens sont couramment désignés par la fonction zoom.

De tels moyens sont particulièrement commodes notamment sur des stations de travail permettant l'optimisation de réseaux de télécommunications mobiles. La carte affichée par de tels moyens d'optimisation présente alors par exemple l'ensemble des moyens de radiodiffusion implantés sur le territoire, ainsi que les cellules associées aux différentes stations de base du réseau.

En pratique, la carte est constituée d'un fond décrivant la topologie du terrain et de symboles répartis sur ce fond aux endroits exacts correspondant aux localisations des éléments de télécommunication mobiles sur le terrain.

Ces symboles sont formés par exemple de formes géométriques simples telles que des croix, des ronds, des carrés, des triangles ou une combinaison de ces formes simples, ou encore par des lettres ou acronymes contenus dans un cadre rond, triangulaire ou carré.

Lors des modifications d'échelle de la carte affichée sur la station de travail, celle-ci commande une modification correspondante de la taille des symboles affichés et de l'échelle du fond de carte sur lequel les symboles apparaissent.

Ainsi, si la carte est à une petite échelle, les symboles présents sur le fond sont très petits et peuvent dans certains cas ne pas être distinguables les ceux-ci deviennent bien visibles mais la portion de la carte affichée par la station de travail est très réduite et limitée à l'environnement immédiat de symboles agrandis. L'opérateur utilisant la station de travail, et notamment pour configurer un réseau de téléphonie mobile est très handicapé puisque seule une partie très petite du réseau lui est présentée.

Le document PATENT ABSTRACTS OF JAPAN vol. 1998, n° 11 , 30 sptembre 1998 (1998-09-30) & JP 10 153438 A (SUMITOMO ELECTRIC INC LTD), 9 juin 1998 (1998-06-09) décrit un système de navigation embarqué, dans lequel les caractères et symboles sont affichés sur la carte avec une taille dépendant de la vitesse du véhicule. Ce système ne prévoit pas un affichage des caractères et symboles avec une taille déterminée indépendamment de l'échelle utilisée pour le fond de carte, et/ou sélectionnée par l'utilisateur.

WO01/61445 décrit une interface graphique comportant un bouton permettant à l'utilisateur de sélectionner la taille des icones. Cette interface ne permet pas de changer l'échelle de l'affichage du fond.

L'invention a donc pour but de proposer une solution aux imperfections des moyens prévus actuellement sur les stations de travail pour un agrandissement local d'une carte, qui permette d'améliorer la lisibilité et de toutefois disposer d'une étendue de carte visible importants,

A cet effet, l'invention a pour objet une station de travail du type précité, caractérisée en ce que ladite interface comporte des moyens de sélection de la seule taille d'au moins un symbole et les moyens de commande sont adaptés pour commander l'unité de visualisation pour modifier la taille du ou de chaque symbole en fonction de la taille sélectionnée sans modifier l'échelle du fond de la carte.

Suivant des modes particuliers de réalisation, la station de travail comporte l'une ou plusieurs des caractéristiques suivantes :
- les symboles sont répartis par type, l'interface comporte des moyens de sélection séparée de la taille de chaque type de symboles, et les moyens de commande sont adaptés pour commander l'unité de visualisation pour modifier la taille de tous lés symboles d'un même type de symboles en fonction de la taille sélectionnée pour le type de symbole sans modifier l'échelle du fond de la carte :
- le ou chaque symbole est associé à un ensemble de matrices de pixels de même aspect et ayant des dimensions différentes, et les moyens de commande sont adaptés pour commander l'unité de Visualisation pour l'affichage de l'une des matrices de pixels en fonction de la taille sélectionnée ;
- ladite interface comporte des moyens de sélection d'une région de la carte et des moyens de modification de l'échelle du fond de la région sélectionnée de la carte, sans modification de la taille des symboles répartis sur cette région sélectionnée et
- les moyens de sélection sont propres à permettre la sélection par échelons prédéterminés de la taille du ou de chaque symbole.
- les moyens de sélection sont propres à permettre la sélection par échelons prédéterminés de la taille du ou de chaque symbole.

L'invention sera mieux comprise à la lecture de la description qui va suivre, donnée uniquement à titre d'exemple, et faite en se référant aux dessins annexés, sur lesquels :
- la figure 1 est une vue en perspective schématique d'une installation selon l'invention ;
- la figure 2 est une vue schématique d'un agrandissement d'une zone de la carte affichée à la figure 1 sans modification de taille des symboles ;
- la figure 3 est une vue à plus grande échelle d'une interface graphique pour la commande du zoom d'une station de travail selon l'invention ; et
- la figure 4 est une vue de la carte agrandie de la figure 2 dans laquelle, seule la taille des symboles a été agrandie par rapport à la taille de ces symboles sur la figure 2.

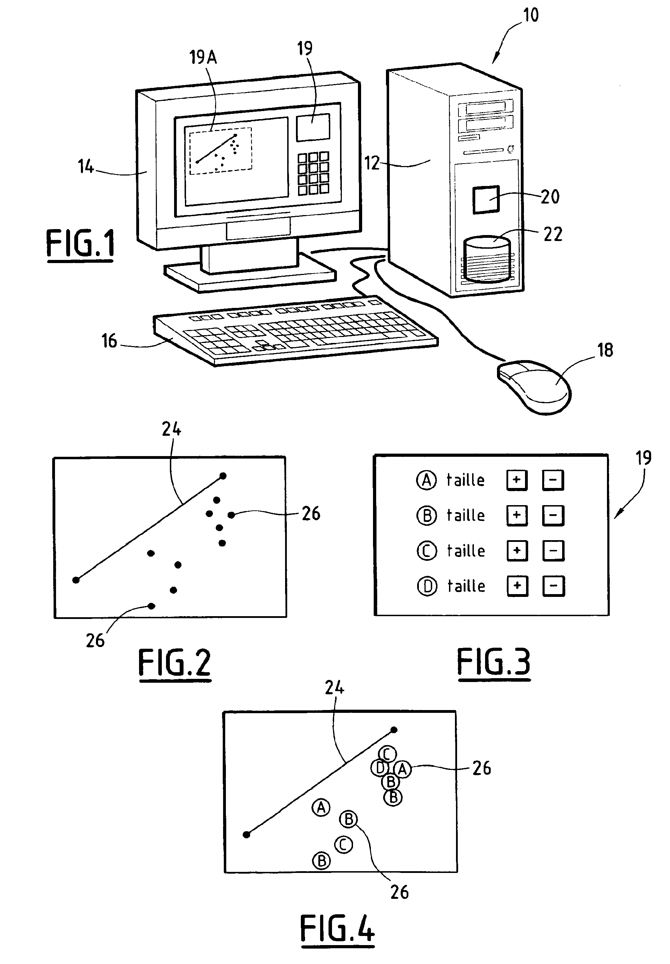

La station de travail 10 illustrée sur la figure 1 est destinée à l'étude et à l'optimisation d'un réseau de téléphonie mobile.

Comme connu en soi, cette station de travail met en oeuvre un logiciel adapté pour la visualisation d'une carte représentant le réseau de téléphonie mobile étudié.

Ainsi, la station comporte une unité centrale de traitement d'informations 12, un écran d'affichage 14 et des moyens formant une interface homme/machine tel qu'un clavier 16, et/ou une souris 18 permettant la sélection de fonctions à partir d'une interface graphique 19 affichée sur l'écran 14. Les interfaces sont propres en particulier à assurer la sélection de fonctions graphiques permettant de modifier l'aspect de l'affichage.

L'unité de traitement d'informations 12 comporte un processeur 20 permettant la mise en oeuvre d'un programme d'ordinateur assurant le traitement de données et la commande de l'affichage sur l'écran 14 à partir des informations reçues du clavier 16 et/ou de la souris 18.

En outre, l'unité 12 comporte des moyens de stockage de données 22, tel qu'un disque dur sur lequel sont mémorisés une description d'une carte et le programme mis en oeuvre par la station de travail.

Le programme est propre notamment à permettre l'affichage sur l'écran 14 de l'ensemble de la carte ou d'une zone réduite de celui-ci d'échelle plus importante.

A cet effet, la carte comporte, dans sa description, tout comme dans son apparence sur les moyens de visualisation 14, un fond 24 et un ensemble de symboles 26 répartis sur ce fond.

Le fond 24 correspond à la forme de la morphologie du terrain suivant l'étendue de la carte, en distinguant, par exemple, la terre, la mer, les rivières, les axes de circulation, les agglomérations et certaines frontières administratives ou techniques.

Les symboles 26 répartis sur le fond correspondent chacun à un élément du réseau réellement présent sur le terrain. Ils sont placés sur le fond à l'endroit correspondant à leur emplacement réel sur le terrain.

Par exemple, les symboles sont formés chacun d'une forme géométrique et/ou d'une combinaison d'une forme géométrique et d'un acronyme désignant le type d'élément présent sur le terrain à l'endroit correspondant du symbole sur le fond.

Plusieurs types de symboles sont ainsi prédéfinis pour désigner par exemple les stations de base du réseau de téléphonie mobile, les points de connexion à un réseau fixe, les autocommutateurs ou tout autre objet du réseau.

Pour chaque type d'élément du réseau, un même symbole est associé à un ensemble de matrices de pixels de plusieurs tailles. Ces matrices sont mémorisées dans les moyens de stockage 22. Ainsi, par exemple un même type de symboles est mémorisé sous la forme d'une matrice de 4x4, 8x8, 12x12, 16x16, 24x24, 32x32, 48x48 et 64x64 pixels.

Le processeur 20 de la station de travail constitue, sous la commande du programme, des moyens de commande de l'unité de visualisation 14 pour modifier l'aspect de la carte en fonction d'une sélection faite par l'utilisateur depuis l'interface de sélection 16, 18 et 19.

Ainsi, et comme connu en soi, lorsque l'ensemble de la carte est affiché sur l'écran 14, comme illustré sur la figure 1, les moyens de commande assurent que les éléments du réseau sont représentés par des symboles 26 de très petite taille, par exemple des matrices de 4x4 pixels.

Par ailleurs, les moyens de sélection intègrent la possibilité de sélectionner une zone déterminée de la carte, afin d'effectuer un changement d'échelle de cette zone. Ce changement d'échelle est tel que la zone sélectionnée occupe, sur l'écran 14, la zone préalablement occupée par la carte. Ainsi, un agrandissement de la carte visualisée est effectué par les moyens de commande de l'affichage, cet agrandissement s'effectuant par un changement d'échelle.

Par exemple, et comme connu en soi, la zone devant être agrandie est sélectionnée par un cadre 19A déplacé sur l'écran à l'aide de la souris 18 jusqu'à englober la zone devant être agrandie.

Suivant un premier mode de mise en oeuvre, et comme connu, les éléments du réseau sont représentés sur l'image agrandie par des symboles dont la taille est agrandie dans des proportions identiques à celles du changement d'échelle de la carte, comme illustré sur la figure.

Ainsi, si seule un quart de la carte initiale a été sélectionné, de sorte que l'échelle puisse être doublée, les symboles initialement de 4x4 pixels sont représentés par des symboles de 8x8 pixels.

Suivant un second mode de mise en oeuvre, et selon l'invention, seul le fond de la carte est agrandi et l'ensemble des symboles répartis sur le fond est maintenu avec sa taille initiale, comme illustré sur la figure 2.

Par ailleurs, les moyens d'affichage mettent à disposition de l'utilisateur l'interface graphique 19 permettant à l'utilisateur de choisir, à l'aide du clavier 14 ou de la souris 16, une nouvelle taille pour chaque type de symboles individuellement.

Un exemple d'une telle interface 19 est illustré sur la figure 3. Sur cette figure, chaque type d'élément du réseau, illustré ici par un symbole formé d'une lettre entourée d'un cercle est associé à un bouton « + » et un bouton « - », permettant à l'utilisateur à partir de la souris de déplacer un pointeur jusqu'à l'un de ces boutons afin d'augmenter (bouton +) ou au contraire de réduire (bouton -) la taille du type de symbole affiché à l'écran.

L'interface permet un choix de la taille de chaque type de symbole, permettant ainsi que certains types de symboles importants soient agrandis alors que d'autres moins utiles sont réduits, l'agrandissement, la réduction et le type de symbole dont la taille est modifiée étant laissés au choix de l'utilisateur.

Ainsi, l'action sur l'un ou l'autre des boutons marqués « + » ou «-» provoque la commande de l'unité de visualisation 14 pour modifier la taille de tous les symboles présents sur la carte du type auquel est associé le bouton actionné sans modifier l'échelle du fond de la carte, et sans que ces symboles ne soient déplacés.

La modification de la taille des symboles s'effectue par échelons prédéterminés, c'est-à-dire que la matrice de pixel utilisée pour l'affichage d'un symbole est remplacée par la matrice mémorisée immédiatement plus grande lors de l'enfoncement du bouton « + » ou la matrice immédiatement plus petite lors de l'enfoncement du bouton « - ». Ainsi par exemple si un symbole affiché est formé d'une matrice de 8x8 pixels, celui-ci est agrandi par affichage d'une matrice correspondante de 12x12 pixels ou celui est diminué par affichage d'une matrice de 4x4 pixels.

Cette variation de la taille par échelons évite à l'utilisateur de devoir entrer une valeur numérique représentative de la taille.

Comme illustré sur la figure 4, l'augmentation de la taille des symboles sans pour autant qu'il y ait modification de l'échelle du fond de la carte permet à l'utilisateur de mieux percevoir les différents symboles et ainsi de les distinguer les uns par rapport aux autres, sans pour autant perdre une partie de la surface carte, et tout en conservant les distances correctes entre les différents symboles.

On conçoit qu'avec une telle station de travail, la configuration et l'amélioration d'un réseau de téléphonie mobile s'avère simplifiée, du fait de la décorrélation entre la modification de l'échelle du fond de la carte et de la taille des symboles présents sur ce fond. En effet, l'utilisateur peut, en fonction des informations qui lui sont nécessaires faire apparaître clairement les symboles qui lui sont utiles, sans pour autant perdre une partie du fond de la carte et en pouvant ainsi continuer à apprécier les distances séparant les différents éléments du réseau représentés par ces symboles.

## Revendications

1. Station de travail (10) avec affichage à échelle variable comportant :
- une unité (14) de visualisation d'au moins une carte comportant un fond et un ensemble de symboles répartis sur le fond ;
- une interface (16, 18, 19, 19A) de sélection de l'aspect de la carte par l'utilisateur,
- des moyens (20) de commande de l'unité de visualisation (14) pour modifier l'aspect de la carte en fonction de la sélection d'aspect faite par l'utilisateur depuis l'interface de sélection (16, 18, 19, 19A) ;
**caractérisée en ce que** ladite interface comporte des moyens (19) de sélection par l'utilisateur de la seule taille d'au moins un symbole et
les moyens de commande (20) sont adaptés pour commander l'unité de visualisation (14) pour modifier la taille du ou de chaque symbole en fonction de la taille sélectionnée sans modifier l'échelle, du fond de la carte

2. Station de travail selon la revendication 1, **caractérisée en ce que** les symboles sont répartis par type, **en ce que** l'interface (19) comporte des moyens de sélection séparée par l'utilisateur de la taille de chaque type de symboles, et **en ce que** les moyens de commande (20) sont adaptés pour commander l'unité de visualisation (14) pour modifier la taille de tous les symboles d'un même type de symboles en fonction de la taille sélectionnée pour le type de symbole sans modifier l'échelle du fond de la carte.

3. Station de travail selon la revendication 1 ou 2, **caractérisée en ce que** le ou chaque symbole est associé à un ensemble de matrices de pixels de même aspect et ayant des dimensions différentes, et **en ce que** les moyens de commande (20) sont adaptés pour commander l'unité de visualisation (14) pour l'affichage de l'une des matrices de pixels en fonction de la taille sélectionnée,

4. Station de travail selon l'une quelconque des revendications précédentes, **caractérisée en ce que** ladite interface comporte des moyens (19A) de sélection d'une région de la carte et des moyens de modification de l'échelle du fond de la région sélectionnée de la carte, sans modification de la taille des symboles répartis sur cette région sélectionnée.

5. Station de travail selon l'une quelconque des revendications précédentes, **caractérisée en ce que** les moyens (19) de sélection sont propres à permettre la sélection par échelons prédéterminés de la taille du ou de chaque symbole.

## Claims

1. Workstation (10) with variable-scale display comprising:
- a display unit (14) for at least one map comprising a background and a set of symbols distributed on the background;
- an interface (16, 18, 19, 19A) for the user to select the appearance of the map;
- means (20) of controlling the display unit (14) to modify the appearance of the map based on the appearance selected by the user from the selection interface (16, 18, 19, 19A);
**characterized in that** said interface comprises means (19) for the user to select the single size of at least one symbol, and
control means (20) are adapted to control the display unit (14) to modify the size of the symbol or of each symbol based on the size selected without modifying the scale of the background of the map.

2. Workstation according to claim 1, **characterized in that** the symbols are distributed by type, **in that** the interface (19) comprises means for the user to separately select the size of each type of symbol, and **in that** the control means (20) are adapted to control the display unit (14) to modify the size of all the symbols of the same type based on the size selected for the type of symbol without modifying the scale of the background of the map.

3. Workstation according to claim 1 or 2, **characterized in that** the symbol or each symbol is associated with a set of pixel matrices of the same appearance and with differed dimensions, and **in that** the control means (20) are adapted to control the display unit (14) for displaying one of the pixel matrices based on the selected size.

4. Workstation according to any of the previous claims, **characterized in that** said interface comprises means (19A) of selecting a region of the map and means of modifying the scale of the background of the selected region of the map, without modifying the size of the symbols distributed over this selected region.

5. Workstation according to any of the previous claims, **characterized in that** the selection means (19) are suitable to allow the selection by pre-determined levels of the size of the symbol or of each symbol.

## Patentansprüche

1. Arbeitsstation (10) mit Anzeige mit variablem Maßstab, umfassend:
- Eine Einrichtung (14) zur Anzeige mindestens einer Karte mit einem Hintergrund und einer auf dem Hintergrund verteilten Reine von Symbolen;
- eine Schnittstelle (16, 18, 19, 19A) für die Auswahl des Aspekts der Karte durch den Benutzer,
- Mittel (20) zum Steuern der Anzeigeeinrichtung (14) zum Ändern des Aspekts der Karte entsprechend der vom Benutzer anhand der Auswahischnittstelle (16, 18, 19, 19A) vorgenommenen Aspektauswahl;
**dadurch gekennzeichnet, dass** die besagte Schnittstelle Mittel (19) für die Auswahl der alleinigen Größe mindestens eines Symbols durch den Benutzer umfasst; und
dass die Steuermittel (20) dazu ausgelegt sind, die Anzeigeeinrichtung (14) anzusteuern, um die Größe des oder eines jeden Symbols gemäß der ausgewählten Größe zu ändern, ohne der Maßstab des Kartenhintergrunds zu ändern.

2. Arbeitsstation nach Anspruch 1, **dadurch gekennzeichnet, dass** die Symbole nach Typen verteilt sind, dass die Schnittstelle (19) Mittel zur separaten Auswahl der Größe eines jeden Symboltyps durch den Benutzer umfasst, und dass die Steuermittel (20) dazu ausgelegt sind, die Anzeigeeinnchtung (14) anzusteuern, um die Größe aller symbole eines selben Symboltyps gemäß der für den Symboltyp ausgewählten Größe zu ändern, ohne den Maßstab des Kartenllintergrunds zu ändern.

3. Arbeitsstation nach Anspruch 1 oder 2, **dadurch gekennzeichnet, dass** das oder ein jedes Symbol mit ether Reihe von Pixelmatrizen gleichen Aspekts und mit unterschiedlichen Abmessungen assoziiert ist, und dass die Steuermittel (20) dazu ausgelegt sind, die Anzeigeeinrichfung (14) anzusteuern, um eine dieser Pixelmatrizen gemäß der ausgewählten Größe anzuzeigen,

4. Arbeitsstation nach einem beliebigen der vorstehenden Ansprüche, **dadurch gekennzeichnet, dass** die besagte Schnittstelle Mittel (19A) für die Auswahl einer Region der Karte sowie Mittel zum Ändern des Maßstabs des Hintergrund der ausgewählten Region ohne Änderung der Größe der über diese ausgewählt Region verteilten Symbole umfasst.

5. Arbeitsstation nach einem beliebiger der vorstehenden Ansprüche, **dadurch gekennzeichnet, dass** die Auswahlmittel (19) geeignet sind, die Auswahl der Größe des oder eines jeden Symbols in vorbestimmten Stufen zu ermöglichen,
